# EUROPEAN PATENT APPLICATION

(11) **EP 4 848 498 A1**
(43) Date of publication of application: **02.12.2026**
(21) Application number: 25179679.3
(22) Date of filing: 29.05.2025
(51) Int. Cl.: H01S 3/00, G01N 21/39, H01S 3/10, H01S 3/1106

(54) **A SYSTEM AND A METHOD FOR TRAPPING LASER PULSES AND A SYSTEM AND A METHOD FOR EXTENDED TIME MEASUREMENTS**

(71) Applicant: Institute of Physical Chemistry PAS, 01-224 Warszawa (PL)
(72) Inventor: ANGULO NÚÑEZ, Gonzalo Manuel, 01-224 Warszawa (PL); RODRÍGUEZ RODRÍGUEZ, Héctor, 01-224 Warszawa (PL); STEPANENKO, Yuriy, 01-224 Warszawa (PL); NEJBAUER, Michal, 01-224 Warszawa (PL); KARDAS, Tomasz, 01-224 Warszawa (PL)
(74) Representative: AOMB Polska Sp. z.o.o.

(57) **Abstract**

The subject matter of the invention is a system for trapping a laser pulse comprising a laser pulse trapping cavity (PTC), wherein the laser pulse is either trapped in PTC or released from PTC, depending only on change of its polarization by Pockets cell inside PTC. The invention also relates to a method for trapping a laser pulse conducted in abovementioned system. The invention also relates to a system for extended time measurements with femtosecond resolved spectroscopic methods characterized in that it comprises a system for trapping a laser pulse and to a method for extended time measurements conducted in that system.

## Description

### Technical field

The subject matter of the present invention is a system for trapping laser pulses, a system for extended time measurements with femtosecond resolution and spectroscopic methods for operating thereof.

### Background art

Currently the upper time limit in transient absorption, fluorescence up-conversion and other spectroscopic techniques making use of femtosecond lasers, is commonly set by the length of mechano-optical delay stages. This means, that typically these experiments cannot exceed a few nanoseconds.

To overcome this limitation, the usual solution is to employ two laser amplified systems electronically interconnected. Such an assembly was applied in transient absorption experiments described by Rao, A., Chow, P. C., Gélinas, S., Schlenker, C. W., Li, C. Z., Yip, H. L., Friend, R. H. "The role of spin in the kinetic control of recombination in organic photovoltaics", Nature, 500(7463), 2013, 435. The authors used 90-fs pulses generated in a Ti:sapphire amplifier system (Spectra-Physics Solstice) operating at 1 kHz. The broadband probe beam was generated in a home-built non-collinear optical parametric amplifier. The pump pulses were generated using a frequency-doubled, q-switched Nd:YVO₄ laser (532 nm). Delay times from 1 ns to 100 ms were achieved by synchronizing the pump laser with the probe pulse using an electronic delay generator. The abovementioned solution requires operational timing of two different laser sources which is sophisticated and expensive.

Other solutions imply changing either the excitation or the probing light sources to expand the time observation window. For example, Lang, B., Mosquera-Vázquez, S., Lovy, D., Sherin, P., Markovic, V., Vauthey, E. in the paper "Broadband ultraviolet-visible transient absorption spectroscopy in the nanosecond to microsecond time domain with sub-nanosecond time resolution", Review of Scientific Instruments, 84(7), 2013, 073107 described the experiment employing the idea of adding an excitation source with pulse duration in the sub-nanosecond domain to an existing ultrafast transient absorption setup and to use the femtosecond supercontinuum as probe in both short pulse and long pulse excitation mode. In the latter, the delay between pump and probe pulses is controlled electronically. The described setup employs a passively Q-switched and frequency tripled Nd:YAG laser as excitation source. The time jitter inherent to the passive Q-switching process is measured on a shot-to-shot basis with high accuracy. The obtained time resolution of 350 ps provides a temporal overlap of almost one order of magnitude between femtosecond (100 fs-2 ns) and sub-nanosecond (350 ps-1 ms) excitation mode. The accessible time scale of an already existing femtosecond transient absorption experiment can thereby be extended into the nanosecond and microsecond time domain without changing the detection system between time scales and on a low-cost basis. Such solution has the shortcoming of the unreliable use of post-processing complex procedures to merge two measurements performed in different conditions.

The document CN108680255B "An ultra-high time-resolution and ultra-long time window transient absorption spectrometer" discloses a transient absorption spectrometer, comprising: a light source module, a beam splitter, two sets of optical delay lines, an optical lens group and a spectrometer; wherein one of the optical delay lines is a short-stroke optical delay line, which is used to realize sub-10 femtosecond optical delay time resolution, and the other is a long-stroke optical delay line for achieving optical delay times greater than 16 nanoseconds. The laser beam emitted by the light source module is divided into pump light and probe light by the beam splitter. After the probe light is time-delayed by two sets of optical delay lines in series, the probe light and pump light after the time delay are separated by the optical lens group, focus on the sample to be tested, and the probe light transmitted by the sample to be tested is collected by the spectrometer. The invention combines the advantages of sub-10 femtosecond ultra-high time delay resolution and nanosecond long time delay window.

### Technical problem - purpose of the invention

The solutions known from the state of the art used for overcoming the issue of upper time limit in spectroscopic techniques either make use of additional expensive amplified systems with large footprint, which require complex electronic synchronization, or provide limited range of possible excitation wavelengths. Taking that into account it has been highly desirable to develop the simplified system utilizing laser source for spectroscopic measurements with elongated time limit, with possible continuous change of excitation wavelength.

### Summary of the invention

According to one aspect of the present invention there is provided a system for trapping laser pulses comprises
- a laser pulse preparation subsystem, and
- a laser pulse trapping cavity, and
- a laser pulse processing subsystem,

wherein the laser pulse preparation subsystem comprises at least one half-wave plate (HWP1, HWP2), at least one lens (L1, L2, L3), and a Faraday Isolator, and
wherein the laser pulse trapping cavity comprises a thin film polarizer (TFP1), a zero-order quarter-wave plate (QWP1), at least one Pockels cell, at least two concave mirrors (M1, M2) and at least one flat mirror with chirp (CM) configured such that the at least two concave mirrors (M1, M2) and the at least one flat mirror with chirp (CM) form a cell and a thin film polarizer (TFP1), a zero-order quarter-wave plate (QWP1) and at least one Pockels cell are placed within said cell in the optical path of the laser pulse, and
wherein the laser pulse processing subsystem comprises at least one half-wave plate, a Faraday Isolator and at least one lens (L4),
wherein the laser pulse preparation subsystem is configured for receiving an uncompressed linearly polarized laser pulse, and directing it through the at least one half-wave plate (HWP1), at least one lens (L1, L2, L3) and the Faraday Isolator to the laser pulse trapping cavity, wherein the at least one lens (L1, L2, L3) are configured for making the laser pulse passing through them matching the Herriott conditions of the pulse trapping cavity, and
wherein the pulse trapping cavity is configured for receiving the laser pulse from the laser pulse preparation subsystem, and directing it through:
   the thin film polarizer (TFP1), oriented at the Brewster's angle with respect to the optical path of the laser pulse received from the laser pulse preparation subsystem
   the zero-order quarter-wave plate (QWP1),
   the Pockels cell, configured for controlling the polarization of the laser pulse,
   to the first concave mirror (M1), which is configured for reflecting the laser pulse through the thin film polarizer (TFP1) to the at least one flat mirror with chirp (CM), which is configured for reflecting the laser pulse to the second concave mirror (M2), which is configured for reflecting the laser pulse back to the at least one flat mirror with chirp (CM), which is configured to reflect the laser pulse in turns through the thin film polarizer (TFP1), the zero-order quarter-wave plate (QWP1) and the Pockels cell (2) to the first concave mirror (M1),
   wherein the thin film polarizer (TFP1) is configured for letting the laser pulse through or reflecting the laser pulse out of the laser pulse trapping cavity depending on the polarization of the laser pulse, and
   wherein the laser pulse processing subsystem is configured for receiving the laser pulse from the laser pulse trapping cavity and directing out of the system, preferably through at least one half-wave plate, Faraday Isolator and the at least one lens (L4).

In one embodiment two concave mirrors M1 and M2 and at least one flat mirror with chirp CM are configured with respect to one another in such a way they form a Herriot cell.

In one embodiment first concave mirror M1 has radius of curvature (R) of 800 mm for laser pulse wavelength 1030 nm and the second concave mirror M2 has radius of curvature (R) of 800 mm for laser pulse wavelength 1030 nm.

In one embodiment the flat mirror with chirp CM has group delay dispersion (GDD) of 0 degrees incidence at 1030 nm ~ -1300 (±200) fs².

In one embodiment the thin film polarizer TFP1 is thin film polarizer for laser pulse wavelength 1030 nm.

In one embodiment the zero order quarter-wave plate QWP1 is zero order quarter-wave plate for laser pulse wavelength 1030 nm.

In one embodiment the Pockels cell is *beta* barium borate (BBO, β-BaB₂O₄) crystal, preferably of 4 mm clear aperture and 25 mm length covered with an anti-reflective coating layer for laser pulse wavelength 1030 nm.

In one embodiment the laser pulse preparation subsystem comprises two zero order half-wave plates, both of them being for laser pulse wavelength 1030 nm, and the first of them (HWP1) is placed in the optical path before at least one lens, and the second one (HWP2) is located in the optical path after the Faraday Isolator.

In one embodiment the laser pulse preparation subsystem comprises three lenses: L1, L2 and L3, located one by one in consecutive order in the optical path, the L1 lens preferably being plano convex lens of focal length (f) of +100 mm, the L2 lens preferably being plano convex lens of focal length (f) of -75 mm, and the L3 lens preferably being plano convex lens of focal length (f) of-75 mm.

In one embodiment the laser pulse preparation subsystem comprises Faraday Isolator located in the optical path after at least one lens (L1, L2, L3) and preferably having4 mm clear aperture for wavelength range of 1010-1045 nm.

In one embodiment the laser pulse processing subsystem comprises one biconvex lens (L4), preferably of focal length (f) of 750 mm.

In one embodiment the at least one half-wave plate and the Faraday Isolator of the laser pulse processing subsystem are the same elements as the at least one half-wave plate (HWP2) and the Faraday Isolator of the laser pulse preparation subsystem.

In another aspect of the present invention there is provided a method for trapping laser pulses conducted in the system according to the invention, wherein the uncompressed linearly polarized laser pulse is passed through the at least half-wave plate (HWP1) and at least one lens (L1, L2, L3) and Faraday Isolator of the laser pulse preparation subsystem, to meet the Herriott conditions, then it is guided to the laser pulse trapping cavity via thin film polarizer TFP1, by reflecting at Brewster's angle inside the laser pulse trapping cavity, then it is directed through the zero-order quarter-wave plate QWP1 and Pockels cell and to the first concave mirror M1 to the at least one flat mirror with chirp CM and to the second concave mirror M2 in which it reflected to the thin film polarizer TFP1, wherein the thin film polarizer (TFP1), depending on the polarization of the laser pulse, lets the laser pulse through or reflects the laser pulse out of the laser pulse trapping cavity to the laser pulse processing subsystem, wherein the laser pulse size is collimated with the at least one lens and is further sent out, and the number of laser pulse rounds inside the cavity is limited by operating the Pockels cell and thereby controlling polarization of the laser pulse.

**In** yet another aspect of the present invention there is provided system for extended time measurements with femtosecond resolved spectroscopic methods including:
- a femtosecond laser source configured for simultaneous generation of compressed and/or uncompressed linearly polarized laser pulse,
- a delay line configured for receiving the compressed laser pulse from the femtosecond laser source, changing the length of the optical path of the said laser pulse and sending it out,
- an optical parametric amplifier configured for receiving the compressed laser pulse, creating excitation laser pulse and sending the excitation laser pulse to a sample,
- a detection camera configured to receive the laser pulse from the sample,
- a reference detection camera configured to receive the reference laser pulse,
and it comprises a system for trapping laser pulses according to the present invention, wherein the laser pulse preparation subsystem is configured for receiving the uncompressed linearly polarized laser pulse generated in the femtosecond laser source, modifying it to meet the Herriott conditions and for directing it to the laser pulse trapping cavity, and wherein the length of the optical path inside the laser pulse cavity is equal to the length of the optical path inside delay line at full extension, and wherein the laser pulse trapping cavity is configured for receiving a laser pulse from the laser pulse preparation subsystem, and for limiting the number of rounds of the laser pulse inside the cavity, preferably by operating the Pockels cell and thereby controlling polarization of the laser pulse, and for sending it out to the laser pulse processing subsystem, and wherein the laser pulse processing subsystem is configured for receiving the laser pulse from the laser pulse trapping cavity, and for collimating the laser pulse, then for sending it out to the compressor for compression, where the laser pulse is compressed and further directed to the analyzed sample.

In another aspect of the invention there is provided a method for extended time measurements conducted in the system according to the present invention, wherein the uncompressed linearly polarized laser pulse generated in the femtosecond laser source is modified in the laser pulse preparation subsystem to meet the Herriott conditions and is directed to the laser pulse trapping cavity, and after exiting the laser pulse trapping cavity is directed to the laser pulse processing subsystem, where the laser beam is collimated and is further sent out, and the number of rounds of the laser pulse in the laser pulse trapping cavity is limited by changing the polarization of the laser pulse by Pockels cell.

### Brief description of drawings

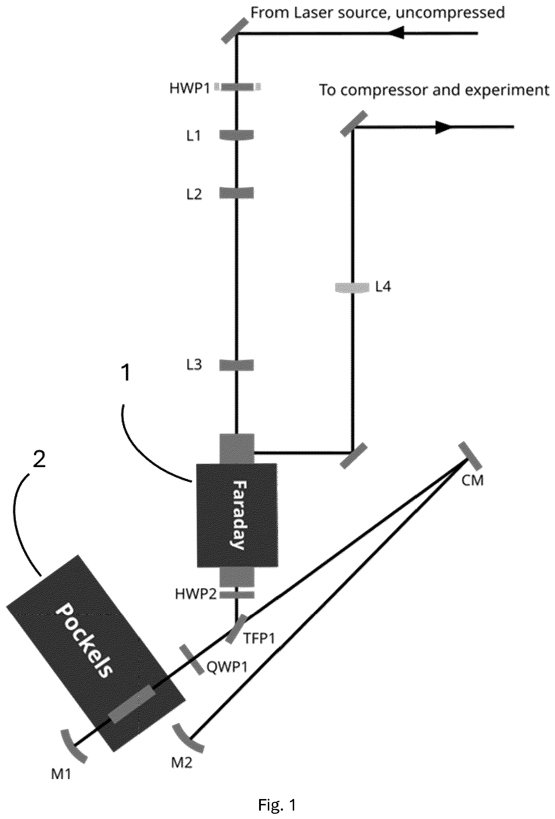

A system for trapping a laser pulse according to the invention is illustrated in the drawing, where Fig. 1 presents a functional scheme of the system for trapping a laser pulse according to the first embodiment, Fig. 2 presents a functional scheme of the electronic layout associated to the PTC, Fig. 3 presents temporal electronic signals activating/deactivating Pockels cell with respect to the input or output of laser light in the PTC.

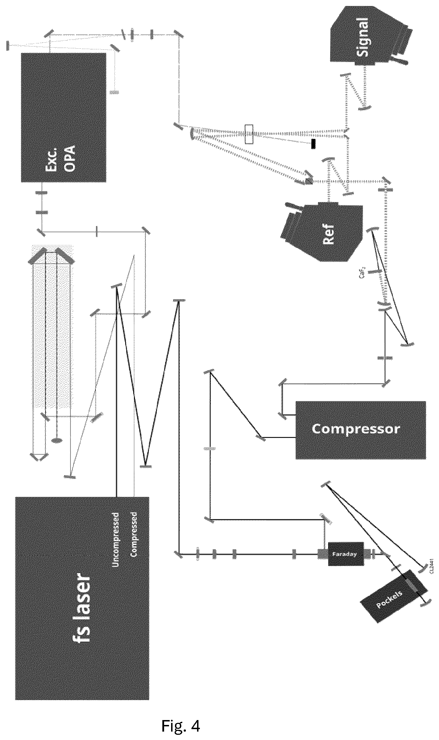

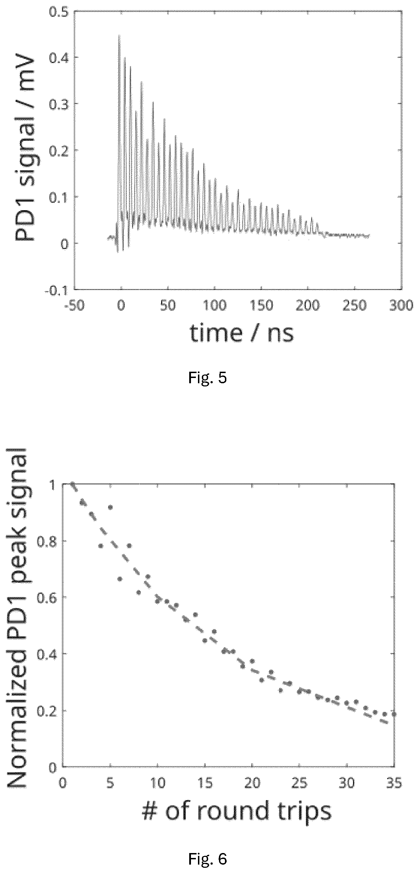

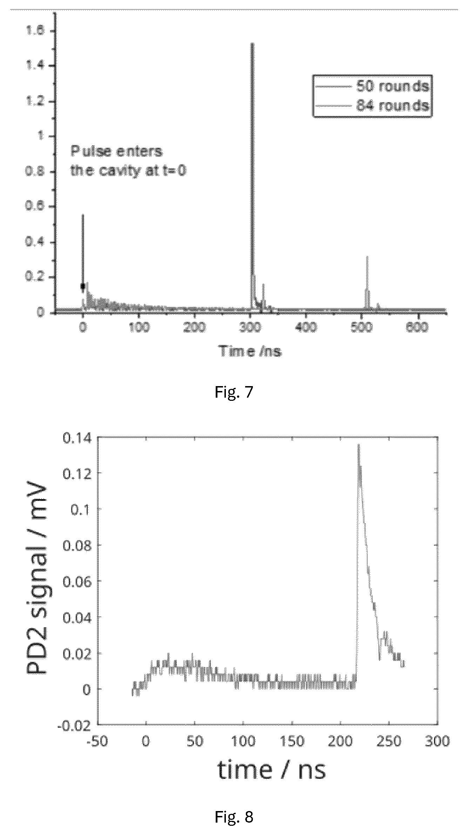

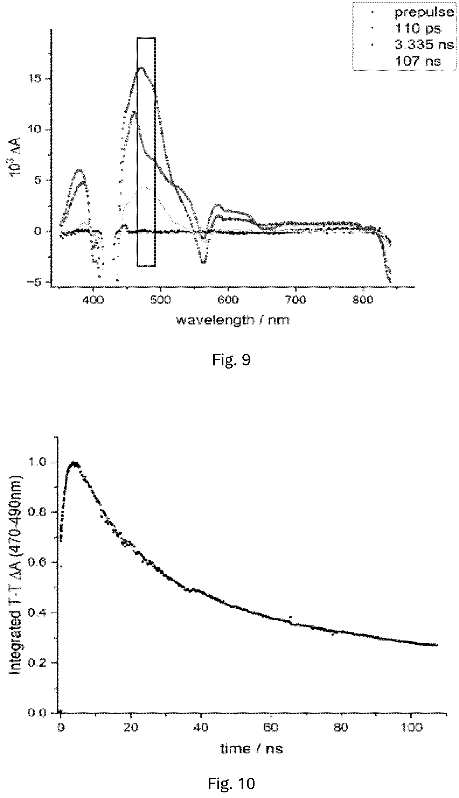

Fig. 4 presents a functional scheme of the system for extended time measurements with femtosecond resolved spectroscopic methods according to a second embodiment, Fig. 5 presents a diagram of losses of energy of the laser pulse trapped in PTC over 35 rounds recorded by a photodiode and an oscilloscope measuring the leak behind the mirror M1 outside the PTC (PD1), Fig. 6 presents another representation of losses of energy of the laser pulse trapped in PTC over 35 rounds recorded by a photodiode and an oscilloscope measuring the leak behind the mirror M1 outside the PTC (PD1), Fig. 7 presents the energy of laser pulse measured after 50 and 84 rounds, Fig. 8 contrast of the output from PTC over 40 rounds recorded by a photodiode and an oscilloscope measuring the total output after the Faraday Isolator (PD2), Fig. 9 presents a transient absorption spectrum of Zinc tetraphenylporphyrin (Zn(TPP)) in cyclohexane, as test experiment according to the second embodiment, and Fig. 10 presents integrated transient absorption of Zn(TPP) in cyclohexane measured for 470-490 wavelength range in relation to time, according to embodiment 2.

### Detailed description of preferred embodiments

### Embodiment 1 - System for Trapping Laser Pulses (comprising the Pulse Trapping Cavity)

According to the following invention, a system for trapping laser pulses in the following embodiment comprises a laser pulse preparation subsystem, a laser pulse trapping cavity (PTC) and a laser pulse processing subsystem.

In the embodiment the laser pulse preparation subsystem comprises the first half-wave plate (HWP1), three lenses (L1, L2 and L3), Faraday Isolator and the second half-wave plate (HWP2).

The said first half-wave plate (HWP1) is zero order half wave plate for laser pulse wavelength 1030 nm. The first lens, namely L1, is plano convex lens of focal length (f) of +100 mm. The second lens, namely L2, is plano convex lens of focal length (f) of -75 mm. And the third lens, namely L3, is plano convex lens of focal length (f) of - 75 mm. The Faraday Isolator is of 4 mm clear aperture for laser pulse wavelength of 1010-1045 nm range. Finally, the second half-wave plate (HWP2) is zero order half wave plate for laser pulse wavelength 1030 nm.

The abovementioned parts are so arranged that they form an optical path for a uncompressed linearly polarized laser beam, so that the uncompressed linearly polarized laser pulse is received by the first half wave plate HWP1, then travels through the three lenses L1, L2 and L3 to Faraday Isolator and the second half wave plate HWP2 to be transmitted to the Pulse Trapping Cavity.

The laser pulse received by laser pulse preparation subsystem in uncompressed in order to avoid potential damage to the optical elements of the system for trapping laser pulse as well as reduce other effects, such as phase dispersion, that are more important the shorter is the duration of the laser pulses.

The role of the first half wave plate HWP1 is to turn the plane of polarization of the laser beam in order to control the input power of laser light that enters the PTC. The angle of polarization of the laser pulse can be turned by any value from 0 to 90 degrees by turning the HWP1. Thus, the amount of energy delivered by laser pulse to the PTC can be tuned in that way. Since the amount of energy per pulse is kept constant in the output of the PTC, this requires increasing the input energy in the cavity to compensate for the unavoidable losses due to imperfect reflectivity of the optics and polarization contrast, as higher numbers of rounds are used. To this end, the HWP1 before the three lenses (L1, L2 and L3) before the PTC is used to control the input power. The upper limit is determined by the maximum amount of energy we can deliver to the PTC, which is of about 800 µJ.

The PTC is so assembled as to form a Herriott cell and the concave mirrors M1 and M2 have curvatures such that for the length of the cavity a beam of a certain numerical aperture (divergence) will fulfil the Herriott condition. In a Herriott cell, light is shaped such that the profile is only dependent on the position inside the cavity and does not depend on how many times the beam has passed through it. In the following embodiment the three lenses, namely L1, L2 and L3, are arranged to adapt the laser beam size and its numerical aperture to match the Herriott cell the PTC forms, as the original laser beam coming from the laser source does not have this aperture, but much smaller.

The Faraday Isolator has a cube polarizer at the entrance and isolates only one polarized component of the laser beam, of polarization plane of angle which is cos² of the angle formed by the plane of the incident laser beam and plane defined by the polarizer. Such determined new plane of polarization of laser beam is further twisted by 45° upon going through the Faraday Isolator body. Faraday Isolator and the second half wave plate (HWP2), which is placed at the fixed angular position, are so arranged that the laser light after passing through them and before entering TFP1 is exclusively S polarized. The Faraday Isolator turns the plane of polarization of laser light 45°, and in order the light to be completely reflected by the thin film polarizer TFP1 which is placed at the Brewster's angle of incidence, laser light entering the PTC must be S-polarized.

The PTC comprises thin film polarizer TFP1 for laser pulse wavelength 1030 nm, zero-order quarter-wave plate for laser pulse wavelength 1030 nm, Pockels cell with beta-barium borate (β-BaB₂O₄) crystal of 4 mm clear aperture and 25 mm length covered with an anti-reflective coating layer for laser pulse wavelength 1030 nm, first and second concave mirrors (M1 and M2), both having radius of curvature R of -800 mm for laser pulse wavelength 1030 nm, and flat mirror with chirp CM, of group delay dispersion (GDD) of 0 degrees incidence, 1030 nm ~ -1300 (+-200) fs². The abovementioned parts are assembled so to form a Herriott cell and also an optical path for a laser pulse coming from the laser pulse preparation subsystem. The laser pulse enters the PTC through TFP1, reflecting at Brewster's angle, then travelling through QWP1, Pockels cell, reflecting in the first concave mirror M1 back to Pockels cell and QWP1, then passing through TFP1 to CM which folds it and directs to the second concave mirror M2. Then, the laser pulse goes back through CM, TFP1, QWP1, Pockels cell, M1, again Pockels cell and QWP1 and reaches TFP1. If at P-polarization state, the laser pulse does not reflects in TFP1 and remains inside the PTC, since only S-polarized laser pulse is reflected by TFP1. If at S-polarization state, then laser pulse reflects on the TFP1 and leaves the PTC.

The two concave mirrors, M1 and M2, together with flat mirror with chirp CM form a Herriott cell. The Herriott cell is needed in order to avoid increasing the beam size due to its original divergence. The role of CM is to compensate the unavoidable spread of phase of the laser pulse upon travelling inside the PTC. As a result, the output beam of the PTC does not have additional dispersion.

The key feature of the PTC involves mutual operation of QWP1 and Pockels cell. The laser pulse is kept inside the cavity as long as the P-polarization state is maintained when hitting TFP1, and leaves the cavity via TFP1 only when in S-polarization state. Having said that, the mode of action of QWP1 and Pockels cell has to be explained in more detail.

The QWP1 creates an elliptical polarization state. Passing twice through it makes ½ total turn. Additionally, Pockels cell in its 'ON' state also acts as quarter-wave plate. When in 'OFF' state Pockels cell does not interact with the laser pulse and does not change its polarization. Thus, by changing the Pockels cell between 'ON' and 'OFF' states one may switch the polarization of the laser pulse between S and P, making it trapped inside the cavity or enabling to leave the cavity via TFP1.

The beam entering the PTC is by definition in S polarization state - otherwise it would not be reflected by the TFP1 at Brewster's angle. Three different scenarios are possible:
1. After passing through the QWP1 the polarization gets twisted from the S by ¼ of the total turn. When the Pockels is in 'OFF' state it does not alter the polarization of the laser pulse. In such a case, the laser pulse changes the polarization from S to P after travelling through QWP1 and Pockels cell in 'OFF' state, reflecting in M1, and going back through Pockels cell in 'OFF' state and QWP1. Then laser pulse goes through TFP1, gets reflected in CM, M2 and again in CM and repeats the double passage through QWP1 and Pockels cell in its 'OFF' state. The latter changes the polarization of the laser pulse back to S, what enables escaping the PTC via TFP1.
2. With the Pockels in 'ON' state, the crystal in it acts exactly the same way as the QWP1. Thus, when passing once through the pair QWP1-Pockels cell the laser beam makes ½ of the total turn and goes from S to P polarization state before reaching M1. When back, it experiences another ½ turn and returns to S before arriving to TFP1. In S polarization, instead of going through the TFP1, is reflected and exits the PTC.
3. The third mode of action involves the change of polarization from S to P as in the initial step of 1) In such a case, the laser pulse changes the polarization from S to P after travelling through QWP1 and Pockels cell in 'OFF' state, reflecting in M1, and going back through Pockels cell in 'OFF' state and QWP1. Immediately after that the Pockels turns into 'ON' state making the pair QWP1-Pockels act like a HWP. The returning laser pulse, in P polarization state, does not change its polarization and thus, remain trapped in PTC, unable to leave via TFP1. The laser pulse is trapped and cannot exit the cavity as long as the Pockels is 'ON'. Whenever one wants to extract the laser pulse from the cavity, the Pockels is switched 'OFF', and then the trip through QWP1+Pockets will again turn the polarization ½ returning it to S, enabling the beam to be reflected by TFP1 and exit the PTC. Thus, we can control by switching ON the Pockels in a precise moment, how many times the laser pulse travels inside the PTC.

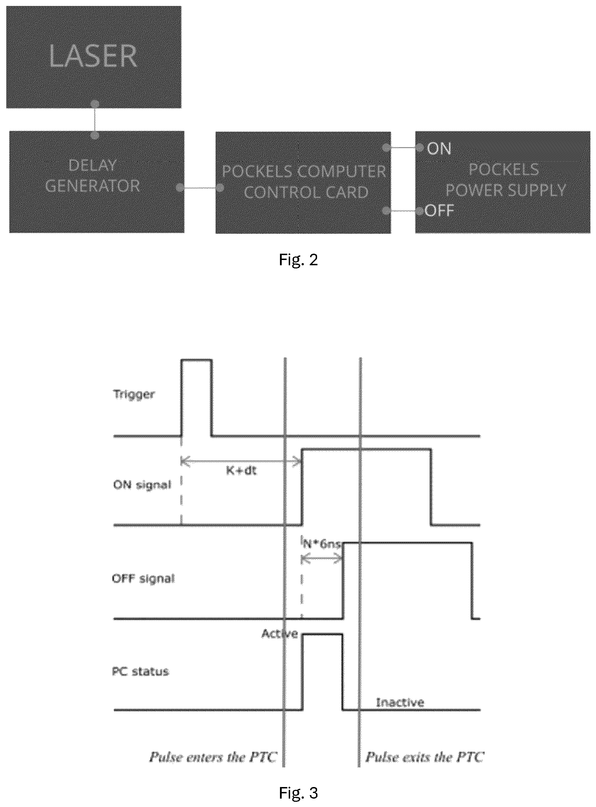

The state of the Pockels cell is controlled by dedicated commercial electronics synchronized with the laser source (Fig. 2): its high voltage is switched on in order to make the Pockels cell work as a quarter wave plate and the response needs to be fast enough as to be able to completely change the Pockels state in less than 5 ns, the time needed for a pulse to travel from it to the M2 and return.

The electronics controlling the changes of the Pockels cell has its own time limitations due to the physical properties of the materials. To react within the 5 ns period of time during which the laser pulse needs to travel from Pockels cell to M2 and back, the change of the Pockels cell between 'ON' and 'OFF' states occurs immediately when the relative difference between two signals measured by the electronics lasts longer than 6 ns, without waiting until full detection of the 'ON' or 'OFF' signal by the controlling electronics is completed.

In the Fig. 3 there are presented different statuses of the Pockels cell with respect to the input or output of light and the electronic signal. When the electronic trigger signal is generated in the fs laser source (the uppermost panel of the Fig. 3) it takes a period of time, represented by the sum of K + Δt, for it to reach the electronics controlling the Pockels cell and activate the 'ON' status of the Pockels cell (the second uppermost panel of the Fig. 3). "K" is an arbitrary amount of time determined experimentally to synchronize the electronics and the arrival of the pulses to the cavity. K is defined from a triggering signal coming from the electronic delay generator and therefore depends on many things, among them the length of the cables from that generator to the card in the computer and the length of the cables from the card to the electronics of the Pockels cell, and these electronics themselves. "Δt" is the 5 ns time shift mentioned above. It depends on the precise location of the Pockels cell inside the cavity and must be smaller than the time the pulse needs to exit the Pockels cell and reflect back to the same point from M2. Moreover, the 'ON' status of the Pockels cell has to be set right after the laser pulse left the Pockels cell after second round through it. The change from 'ON' to 'OFF' status of the Pockels cell (or reverse) must be accomplished within less than 5 ns time period (the second lowermost panel of the Fig. 3) to enable the laser pulse leaving the PTC. Alternatively, when needed the laser pulse may remain trapped in the PTC for longer period of time, namely the multiple of 6 ns time period, N * 6 ns, where "N" stands for a positive integer.

A laser pulse processing subsystem comprises the half wave plate and the Faraday Isolator, preferably being the same parts as for laser pulse preparation subsystem (i.e. HWP2 and Faraday Isolator), and a biconvex lens L4 having the focal length of 750 mm. The Faraday Isolator blocks the laser pulse leaving the PTC from going back to the laser source. The said parts are so arranged to one another to receive the laser pulse coming out from the PTC, to direct it through HWP2, then through Faraday Isolator and to send it out via lens L4.

The effect of HWP2 is symmetrical to the effect on the laser pulse entering the PTC: it turns the S polarization of the exiting laser pulse the same way it did earlier for the entering laser pulse, such that it can go through the polarizer of the Faraday Isolator. The unique feature of the Faraday Isolator is that depending on the direction of the laser pulse, it turns it differently. Thus, after passing through it when coming from the PTC it is in a polarization state such that it is reflected to 90° by the second polarizer and exits the Faraday Isolator, further directed to the compressor. The lens L4 re-collimates the laser pulse which otherwise would conserve the divergence introduced by lenses L1, L2 and L3. Therefore, when exiting lens L4 the laser pulse is prepared to enter the compressor: it is collimated and in S polarization.

### Embodiment 2 - system for extended time measurements with femtosecond resolved spectroscopic methods

According to the following invention, a system for extended time measurements with femtosecond resolved spectroscopic methods in the following embodiment comprises a commercial fs laser source capable of generating compressed and uncompressed laser pulses, a delay line, an optical parametric amplifier OPA, a system for trapping laser pulses, a compressor, a CaF₂ crystal for generation of Supercontinuum White Light (SCWL), a sample holder, two cameras: a detection camera and the reference detection camera, receiving analyzed signals and reference signals respectively.

The fs laser source is a commercial composite comprising oscillator, stretcher, amplifier and compressor. As such, it produces a single laser beam after the amplifier. Next, the said laser beam is divided into two: the one that passes through the compressor inside the fs laser source and the other that exits the fs laser source uncompressed. The first laser beam (compressed) is then directed to the delay line, and later to OPA and to the analyzed sample. The latter laser beam (uncompressed) is the laser beam that goes to the system for trapping laser pulses, compressor, and in the next step is used for generating SCWL in the CaF₂ crystal, which is directed to the analyzed sample.

The length of commercially available delay line can be varied in order to change the length of the optical path of the compressed laser beam, before sending it to OPA and in order to perform experiments at different delay times between two laser beams (the compressed one and the other, travelling through the pulse trapping system). Moreover, the length of the PTC is determined by the length of the delay line, such that each passage of laser pulse inside the PTC represents one and just one trip of laser beam over the delay line at full extension. In other words, the length of the optical path of the PTC and the length of the optical path of the delay line at full extension are equal. When in the present description, one trip of light over the delay line, it should be understood as the full extent of the possible variation of the light path in the delay line. In the following embodiment the maximum extent of the delay line is 6 ns, therefore the optical length between mirror M1 and mirror M2 via flat mirror CM in the PTC is set to 90 cm. The delay line receives the compressed laser beam from the fs laser source and sends it to the OPA.

The Optical Parametric Amplifier (OPA, commercial) enables changing the wavelength of the laser light which in turn allows for excitation of samples of various excitation wavelengths. The OPA used in the following embodiment receives the compressed laser beam from the delay line, changes its wavelength to any dedicated value from 350 to 700 nm and redirects it to the analyzed sample to excite it.

The uncompressed laser beam generated in the fs laser source is sent to the laser pulse trapping system for a required period of time, dependent on experiment conditions. After exiting the laser pulse trapping system it is sent to the compressor to recover laser pulses of the duration delivered by the amplified laser system (of FWHM below 190 fs). In the next step, such compressed laser beam generates SCWL in the CaF₂ crystal. Calcium fluoride crystal was used in the following embodiment, yet any other material capable of generating SCWL upon laser pulse is conceivable in replace.

The uncompressed laser beam enters the pulse trapping cavity with pulses of 800 µJ at 1030 nm of 400 ps duration. To determine the losses of energy of the trapped laser pulse with the number of rounds two positions have been monitored with photodiodes and an oscilloscope: the leak behind mirror M1 outside the cavity (PD1) and the total output after the Faraday isolator (PD2). As shown on graph in Fig. 5 the energy of the pulse decreases with the increasing time the pulse is trapped inside the PTC. The different representation of the same data is depicted in Fig. 6, with normalized PD1 peak signals in relation to the number of rounds of the laser pulse inside the PTC. To these data a simple function (1-L)^(r-1) was fit, in which "L" stands for the losses per round and "r" to the number of rounds. This way it was determined that the losses per round are of approximately 5.5%.

In Fig. 7 presented is the contrast of the output from the cavity shown for the 40^{th} round. Due to the leaks from the PTC, even if the energy is enough to produce SCWL after the n^{th} round, where "n" denotes any natural number of 1 or higher, one needs to be sure that the contrast is sufficiently high with the leaks as to avoid producing SCWL with laser light from the first round.

Fig. 8 presents the data provided by PD2 as graphical comparison of energy of the laser pulses measured after 50 (red line) and 84 (black line) rounds inside the PTC, depicted in relation to total time inside the PTC. As the amount of energy needed to produce Supercontinuum White Light (SCWL) is less than 3µJ, and even the laser pulse after 84 rounds inside the PTC was able to generate SCWL on CaF₂ plate, it is thus possible to reach delay times between excitation of the sample and arrival of the probing SCWL above 500 ns in transient absorption experiment.

SCWL light generated in CaF₂ is then split into two copies such that one overlapped with the excitation in the sample (S, S^{E}), and the other passed it through another point (R, R^{E}). The S signal is the SCWL copy that coincides spatially with the exciting laser beam coming from the OPA in the sample. The R signal passes through the sample in another point and is just used for comparison. The superscript "E" stands for measurements in presence of the laser beam coming from OPA (excitation laser beam). Two measurements are performed in the example of both S and R: with and without the presence of the exciting laser beam coming from the OPA. Each of them was directed to a different detection camera. The excitation was chopped to half its repetition frequency, so each spectrum makes use of four measurements: S (SCWL in the excitation spot without excitation), S^{E} (SCWL in the excitation spot with excitation), R (SCWL out of the excited region without excitation) and R^{E} (SCWL out of the excited region with excitation). Thus, the measurement is double referred. The measurement is of the change of absorbance (or transmittance) of the sample due to the presence of the exciting laser beam coming from the OPA. The transient absorption in this referenced scheme is calculated as: $ΔA = log \frac{{SR}^{E}}{{S}^{E} R}$

The S and the R signals are analyzed by commercial dedicated detection cameras, each of them equipped with slit, diffraction grating and silicon based 512 pixels array detector.

As a test sample was measured Zn(II) tetraphenylporphyrin (ZnTPP) dissolved in cyclohexane, known for having a triplet-triplet absorption living for close to 1 s in anaerobic conditions. Such a sample was placed on a fused silica cuvette and excited at 420 nm. Spectra so obtained (Fig. 9) were taken before the pulse of excitation and three other time steps. The kinetics are reconstructed from the integrated signal in the marked region of the spectra (Fig. 10). Each of the 6 ns pieces, corresponding each to one round in the PTC was corrected for the excitation energy changes recorded during the measurement. These changes are due to the fact that the delay stage is placed before the excitation OPA leading to a change of beam size over the delay stage position, and therefore a change of OPA efficiency. The dependence of the OPA output energy follows the expected form: the longer the path the laser beam needs to travel in the delay stage, the smaller the energy output of the OPA as the divergence increases. Then, each of the rounds transient absorption signals were merged by making coincide the last temporal signal with the first of the following round. This is, as seen in the presented kinetics, a valid method for slowly changing continuous signals. In the rare case of much faster changes, a method matching the derivatives should be used.

This transient absorption is known to correspond to the triplet state of the molecule. In the kinetics two phenomena can be seen: the triplet formation from the originally excited singlet (rising of the curve at early times) which has a tabulated lifetime of 2 ns, and a decay at longer times. The lifetime of ZnTPP in purged of oxygen cyclohexane solutions at room temperature is tabulated to be much longer than observed; nevertheless, the sample studied here was not purged from oxygen, and the decay matches qualitatively what is to be expected from a triplet quenching by energy transfer to oxygen taken a rate constant for the process controlled by molecular diffusion and the equilibrium O₂ concentration of cyclohexane with a normal 21 % O₂ containing atmosphere.

## Claims

1. A system for trapping a laser pulse comprising:
• a laser pulse preparation subsystem,
• a laser pulse trapping cavity, and
• a laser pulse processing subsystem,
wherein the laser pulse preparation subsystem comprises at least one half-wave plate (HWP1, HWP2), at least one lens (L1, L2, L3), and a Faraday Isolator (1), and
wherein the laser pulse trapping cavity comprises a thin film polarizer (TFP1), a zero-order quarter-wave plate (QWP1), at least one Pockels cell (2), at least two concave mirrors (M1, M2) and at least one flat mirror with chirp (CM) configured such that the at least two concave mirrors (M1, M2) and the at least one flat mirror with chirp (CM) form a cell and a thin film polarizer (TFP1), a zero-order quarter-wave plate (QWP1) and at least one Pockels cell (2) are placed within said cell in the optical path of the laser pulse, and
wherein the laser pulse processing subsystem comprises at least one half-wave plate, a Faraday Isolator and at least one lens (L4),
wherein the laser pulse preparation subsystem is configured for receiving an uncompressed linearly polarized laser pulse, and directing it through the at least one half-wave plate (HWP1), at least one lens (L1, L2, L3) and the Faraday Isolator (1) to the laser pulse trapping cavity, wherein the at least one lens (L1, L2, L3) are configured for making the laser pulse passing through them matching the Herriott conditions of the pulse trapping cavity, and
wherein the pulse trapping cavity is configured for receiving the laser pulse from the laser pulse preparation subsystem, and directing it through:
the thin film polarizer (TFP1), oriented at the Brewster's angle with respect to the optical path of the laser pulse received from the laser pulse preparation subsystem,
the zero-order quarter-wave plate (QWP1),
the Pockels cell (2), configured for controlling the polarization of the laser pulse,
to the first concave mirror (M1), which is configured for reflecting the laser pulse through the thin film polarizer (TFP1) to the at least one flat mirror with chirp (CM), which is configured for reflecting the laser pulse to the second concave mirror (M2), which is configured for reflecting the laser pulse back to the at least one flat mirror with chirp (CM), which is configured to reflect the laser pulse in turns through the thin film polarizer (TFP1), the zero-order quarter-wave plate (QWP1) and the Pockels cell (2) to the first concave mirror (M1),
wherein the thin film polarizer (TFP1) is configured for letting the laser pulse through or reflecting the laser pulse out of the laser pulse trapping cavity depending on the polarization of the laser pulse, and
wherein the laser pulse processing subsystem is configured for receiving the laser pulse from the laser pulse trapping cavity and directing out of the system, preferably through the at least one half-wave plate, Faraday Isolator and at least one lens (L4).

2. The system according to claim 1, wherein the two concave mirrors (M1, M2) and the at least one flat mirror with chirp (CM) are configured with respect to one another in such a way they form a Herriott cell.

3. The system according to claim 1 or 2, wherein the first concave mirror (M1) has radius of curvature (R) of 800 mm for laser pulse wavelength 1030 nm and the second concave mirror (M2) has radius of curvature (R) of 800 mm for laser pulse wavelength 1030 nm.

4. The system according to any one of claims from 1 to 3, wherein the flat mirror with chirp (CM) has group delay dispersion (GDD) of 0 degrees incidence at 1030 nm ~ -1300 (±200) fs².

5. The system according to any one of claims from 1 to 4, wherein the thin film polarizer (TFP1) is a thin film polarizer for laser pulse wavelength 1030 nm.

6. The system according to any one of claims from 1 to 5, wherein the zero order quarter-wave plate (QWP1) is a zero order quarter-wave plate for laser pulse wavelength 1030 nm.

7. The system according to any one of claims from 1 to 6, wherein the Pockels cell (2) comprises a beta barium borate (BBO, β-BaB₂O₄) crystal, preferably of 4 mm clear aperture and 25 mm length, preferably covered with an anti-reflective coating layer, for laser pulse wavelength 1030 nm.

8. The system according to any one of claims from 1 to 7, wherein the laser pulse preparation subsystem comprises two zero order half-wave plates, both of them for laser pulse wavelength 1030 nm, and the first of them (HWP1) is placed in the optical path of the laser pulse before the at least one lens (L1, L2, L3), and the second one (HWP2) is located in the optical path of the laser pulse after the Faraday Isolator (1).

9. The system according to any one of claims from 1 to 8, wherein the laser pulse preparation subsystem comprises three lenses (L1, L2, L3), located one by one in consecutive order in the optical path, the L1 lens preferably being plano convex lens of focal length (f) of +100 mm, the L2 lens preferably being plano convex lens of focal length (f) of -75 mm, and the L3 lens preferably being plano convex lens of focal length (f) of - 75 mm.

10. The system according to any one of claims from 1 to 9, wherein the laser pulse preparation subsystem comprises Faraday Isolator (1) located in the optical path of the laser pulse after the at least one lens (L1, L2, L3), preferably having 4 mm clear aperture for wavelength range of 1010-1045 nm.

11. The system according to any one of claims from 1 to 10, wherein the laser pulse processing subsystem comprises one biconvex lens (L4), preferably of focal length (f) of 750 mm.

12. The system according to any one of claims from 1 to 11, wherein the at least one half-wave plate and the Faraday Isolator of the laser pulse processing subsystem are the same elements as the at least one half-wave plate (HWP2) and the Faraday Isolator (1) of the laser pulse preparation subsystem.

13. A method for trapping a laser pulse conducted in the system according to any one of claims from 1 to 12, wherein the uncompressed linearly polarized laser pulse is passed through the at least one half-wave plate (HWP1) and at the least one lens (L1, L2, L3) and the Faraday Isolator (1) of the laser pulse preparation subsystem, to meet the Herriott conditions, then the laser pulse is guided to the laser pulse trapping cavity via the thin film polarizer (TFP1), is reflected at the Brewster's angle inside the laser pulse trapping cavity, then directed through the zero-order quarter-wave plate (QWP1) and the Pockels cell (2) and to the first concave mirror (M1), to the at least one flat mirror with chirp (CM) and to the second concave mirror (M2) in which it reflected to the thin film polarizer (TFP1),
wherein the thin film polarizer (TFP1), depending on the polarization of the laser pulse, lets the laser pulse through or reflects the laser pulse out of the laser pulse trapping cavity to the laser pulse processing subsystem, wherein the laser pulse size is collimated with the at least one lens (L4) and the laser pulse is further sent out,
**characterized in that** the number of laser pulse rounds inside the cavity is limited by operating the Pockels cell (2) and thereby controlling polarization of the laser pulse.

14. A system for extended time measurements with femtosecond resolved spectroscopic methods including:
• a femtosecond laser source configured for simultaneous generation of a compressed and/or an uncompressed laser pulse,
• a delay line configured for receiving the compressed laser pulse from the femtosecond laser source, changing the length of the optical path of the said laser pulse and sending it out,
• an optical parametric amplifier configured for receiving the compressed laser pulse, creating excitation laser pulse and sending the excitation laser pulse to a sample,
• a detection camera configured to receive the laser pulse from the sample,
• a reference detection camera configured to receive a reference laser pulse,
**characterized in that** it comprises the system for trapping laser pulses according to any one of claims from 1 to 12,
wherein the laser pulse preparation subsystem is configured for receiving the uncompressed linearly polarized laser pulse generated in the femtosecond laser source, modifying it to meet the Herriott conditions and for directing it to the laser pulse trapping cavity, and
wherein the length of the optical path inside the laser pulse cavity is equal to the length of the optical path inside delay line at full extension, and
wherein the laser pulse trapping cavity is configured for receiving a laser pulse from the laser pulse preparation subsystem, and for limiting the number of rounds of the laser pulse inside the cavity, preferably by operating the Pockels cell (2) and thereby controlling polarization of the laser pulse, and for sending it out to the laser pulse processing subsystem, and
wherein the laser pulse processing subsystem is configured for receiving the laser pulse from the laser pulse trapping cavity, for collimating the laser pulse, and for sending it to a compressor for compression, and for further directing the laser pulse to the sample.

15. A method for extended time measurements conducted in the system according to claim 14, wherein an uncompressed linearly polarized laser pulse generated in the femtosecond laser source is modified in the laser pulse preparation subsystem to meet the Herriott conditions and is directed to the laser pulse trapping cavity, and after exiting the laser pulse trapping cavity is directed to the laser pulse processing subsystem, where the laser pulse size is collimated and is further sent out, **characterized in that** the number of rounds of the laser pulse in the laser pulse trapping cavity is limited by changing the polarization of the laser pulse by the Pockels cell (2).
